(19) Europäisches Patentamt
European Patent Office
Office européen des brevets

(11) **EP 4 105 685 A1**

(12) **EUROPEAN PATENT APPLICATION**
published in accordance with Art. 153(4) EPC

(43) Date of publication:
**21.12.2022 Bulletin 2022/51**

(21) Application number: **21764488.9**

(22) Date of filing: **27.02.2021**

(51) International Patent Classification (IPC):
***G01S 7/484*** (2006.01)

(52) Cooperative Patent Classification (CPC):
**G01S 7/35; G01S 7/484; G01S 13/32; G01S 13/931**

(86) International application number:
**PCT/CN2021/078323**

(87) International publication number:
**WO 2021/175168 (10.09.2021 Gazette 2021/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.03.2020 CN 202010134407**

(71) Applicant: **Huawei Technologies Co., Ltd.
Shenzhen, Guangdong 518129 (CN)**

(72) Inventors:
• **CHANG, Guanghong
Shenzhen, Guangdong 518129 (CN)**
• **QIN, Boya
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **SIGNAL PROCESSING METHOD AND APPARATUS**

(57) A signal processing method and apparatus are provided, to ensure orthogonality between detection signals transmitted by different transmit antennas, so that angular resolution of target detection is increased. The method includes: determining and sending a first sequence set, where the first sequence set includes at least one first sequence, and the at least one first sequence is an orthogonal sequence obtained after fast-time dimension coding and slow-time dimension coding; and then, receiving a reflected signal of the first sequence set, and determining one or more of a distance, a velocity, and an azimuth of a detection target based on the reflected signal.

```
┌─────────────────────────────────────────┐
│   S301: Determine a first sequence set   │
└─────────────────────────────────────────┘
                     │
                     ▼
┌─────────────────────────────────────────┐
│   S302: Send the first sequence set      │
└─────────────────────────────────────────┘
```

FIG. 3

**Description**

This application claims priority to Chinese Patent Application No. 202010134407.9, filed with the China National Intellectual Property Administration on March 2, 2020 and entitled "SIGNAL PROCESSING METHOD AND APPARATUS ", which is incorporated herein by reference in its entirety.

**TECHNICAL FIELD**

This application relates to the target detection field, and in particular, to a signal processing method and apparatus.

**BACKGROUND**

A radar system may determine information such as a distance, a velocity, and an azimuth of a target based on a result of comparison between a transmit signal of a radar and a reflected signal of the target. The transmit signal of the radar may be implemented by using a plurality of fast-time (fast time) dimension code division multiplexing (code division multiplexing, CDM) sequences, or may be implemented by separately modulating an original transmit sequence by using a plurality of slow-time (slow time) dimension CDM sequences. Both a quantity of fast-time dimension sequences and a quantity of slow-time dimension sequences are a quantity of transmit antennas. To avoid crosstalk, the plurality of fast-time dimension CDM sequences or the plurality of slow-time dimension CDM sequences may be orthogonal sequences.

However, for the foregoing solution of the fast-time dimension CDM sequence, a matching filtering operation in which a filtering length is a sequence length needs to be performed on all the fast-time dimension CDM sequences, to distinguish target signals at different distances. When the quantity of transmit antennas is relatively large and/or the sequence length is relatively long, a matching filtering operation amount significantly increases accordingly, and consequently, technical complexity and costs of the radar system are high. For the foregoing solution of the slow-time dimension CDM sequence, although a matching filtering operation may be performed only once, when the target moves at a high velocity and/or the quantity of transmit antennas is relatively large, orthogonality between the plurality of slow-time dimension CDM sequences deteriorates, and consequently, an effective detection range and/or an effective detection velocity of the radar system are/is reduced. In other words, detection performance of the radar system deteriorates.

**SUMMARY**

Embodiments of this application provide a signal processing method and apparatus, to ensure orthogonality between transmit signals of different transmit antennas, so that angular resolution of target detection is increased.

To achieve the foregoing objectives, the following technical solutions are used in this application.

According to a first aspect, a signal processing method is provided. The method includes: determining a first sequence set, where the first sequence set includes at least one first sequence, and the at least one first sequence is an orthogonal sequence obtained after fast-time dimension coding and slow-time dimension coding; and then, sending the first sequence set.

Based on the signal processing method in the first aspect, a detection signal may be transmitted by using the orthogonal sequence obtained after fast-time dimension coding and slow-time dimension coding. In one aspect, compared with that in a separate slow-time dimension coding solution, in the signal processing method in the first aspect, a smaller quantity of slow-time dimension sequences can be used to avoid a problem that orthogonality between a relatively large quantity of slow-time dimension sequences deteriorates when a detection target moves at a high velocity, so that orthogonality between detection signals transmitted by different transmit antennas can be ensured, to increase angular resolution of target detection. In addition, compared with that in a separate fast-time dimension coding solution, in the signal processing method in the first aspect, a quantity of fast-time dimension sequences can be reduced to lighten workload of a receive end. For example, a quantity of matching filtering operations or correlation operations for the fast-time dimension sequences can be reduced. In this way, a smaller quantity of matching filters or correlators may be disposed at the receive end, to reduce technical complexity and hardware costs of a signal processing apparatus. In a possible design solution, the signal processing method in the first aspect may further include: determining $M_1$ fast-time dimension sequences; and then, determining a second sequence set. The second sequence set may include $M_a$ first sequences, the $M_a$ first sequences may be sequences obtained after slow-time dimension coding is performed on the $M_1$ fast-time dimension sequences by using $M_2$ slow-time dimension sequences, $M_a=M_1 \times M_2$, $M_a$ is greater than or equal to M, and M is a quantity of transmit antennas.

Optionally, the determining a first sequence set may include: determining the first sequence set based on the $M_a$ first sequences, where the first sequence set may include M first sequences.

In a possible design solution, the signal processing method in the first aspect may further include: determining a quantity of fast-time dimension sequences based on the quantity of transmit antennas and a quantity of slow-time dimension sequences, where $M_1 = \lceil M / M_2 \rceil$, and $\lceil \; \rceil$ means rounding up.

Optionally, the determining a second sequence set may include: If a coding scheme of the $M_1$ fast-time dimension sequences is the same as a coding scheme of the $M_2$ slow-time dimension sequences, the $M_a$ first sequences may be a Kronecker product of the $M_1$ fast-time dimension sequences and the $M_2$ slow-time dimension sequences.

In a possible design solution, the signal processing method in the first aspect may further include: determining, based on a maximum detection range and a maximum detection velocity, a quantity of first sequences included in the second sequence set, where $M_a = \lfloor \lfloor c / (4 f_c * T_c * V_{max}) \rfloor / \lceil R_{max} / R_d \rceil \rfloor$, $M_a$ is the quantity of first sequences included in the second sequence set, C is a propagation velocity of an electromagnetic wave, $f_c$ is a carrier frequency, $T_c$ is a code length, $V_{max}$ is the maximum detection velocity, $R_{max}$ is the maximum detection range, $R_d$ is range resolution, $\lfloor \; \rfloor$ means rounding down, and $\lceil \; \rceil$ means rounding up.

Optionally, a sequence set obtained through fast-time dimension coding includes $M_1$ first orthogonal sequences, the $M_1$ first orthogonal sequences are sequences whose period cross-correlation value is zero in a valid delay, and the valid delay is less than or equal to a delay corresponding to a sequence length of the $M_1$ first orthogonal sequences. Correspondingly, a sequence set obtained through slow-time dimension coding includes $M_2$ second orthogonal sequences, and the $M_2$ second orthogonal sequences are Hadamard sequences or multi-carrier orthogonal sequences whose period cross-correlation value is zero in a case of a zero delay.

According to a second aspect, a signal processing apparatus is provided. The signal processing apparatus includes a processing module and a transceiver module. The processing module is configured to determine a first sequence set, where the first sequence set includes at least one first sequence, and the at least one first sequence is an orthogonal sequence obtained after fast-time dimension coding and slow-time dimension coding. The transceiver module is configured to send the first sequence set.

In a possible design solution, the processing module is further configured to: determine $M_1$ fast-time dimension sequences, and determine a second sequence set. The second sequence set may include $M_a$ first sequences, the $M_a$ first sequences may be sequences obtained after slow-time dimension coding is performed on the $M_1$ fast-time dimension sequences by using $M_2$ slow-time dimension sequences, $M_a = M_1 \times M_2$, $M_a$ is greater than or equal to M, and M is a quantity of transmit antennas

In another possible design solution, the processing module is further configured to determine the first sequence set based on the $M_a$ first sequences, where the first sequence set may include M first sequences.

Optionally, the processing module is further configured to determine a quantity of fast-time dimension sequences based on the quantity of transmit antennas and a quantity of slow-time dimension sequences, where $M_1 = \lceil M / M_2 \rceil$, and $\lceil \; \rceil$ means rounding up.

Optionally, if a coding scheme of the $M_1$ fast-time dimension sequences is the same as a coding scheme of the $M_2$ slow-time dimension sequences, the $M_a$ first sequences may be a Kronecker product of the $M_1$ fast-time dimension sequences and the $M_2$ slow-time dimension sequences.

In a possible design solution, the processing module is further configured to determine, based on a maximum detection range and a maximum detection velocity, a quantity of first sequences included in the second sequence set, where $M_a = \lfloor \lfloor c / (4 f_c * T_c * V_{max}) \rfloor / \lceil R_{max} / R_d \rceil \rfloor$, $M_a$ is the quantity of first sequences included in the second sequence set, C is a propagation velocity of an electromagnetic wave, $f_c$ is a carrier frequency, $T_c$ is a code length, $V_{max}$ is the maximum detection velocity, $R_{max}$ is the maximum detection range, $R_d$ is range resolution, $\lfloor \; \rfloor$ means rounding down, and $\lceil \; \rceil$ means rounding up.

Optionally, a sequence set obtained through fast-time dimension coding includes $M_1$ first orthogonal sequences, the $M_1$ first orthogonal sequences are sequences whose period cross-correlation value is zero in a valid delay, and the valid delay is less than or equal to a delay corresponding to a sequence length of the $M_1$ first orthogonal sequences. Correspondingly, a sequence set obtained through slow-time dimension coding includes $M_2$ second orthogonal sequences, and the $M_2$ second orthogonal sequences are Hadamard sequences or multi-carrier orthogonal sequences whose period cross-correlation value is zero in a case of a zero delay.

Optionally, the signal processing apparatus in the second aspect may further include a storage module, and the storage module stores a program or instructions. When the processing module executes the program or the instructions, the signal processing apparatus in the second aspect may be enabled to perform the signal processing method in the first aspect.

It should be noted that the signal processing apparatus in the second aspect may be a vehicle-mounted radar, a vehicle-mounted controller coupled to the vehicle-mounted radar, a vehicle with a function of the vehicle-mounted radar and/or a function of the vehicle-mounted controller, or a chip (system) or another component or assembly that can be disposed on the vehicle-mounted radar and/or the vehicle-mounted controller. This is not limited in this application. In addition, for a technical effect of the signal processing apparatus in the second aspect, refer to the technical effect of the signal processing method in the first aspect. Details are not described herein again.

According to a third aspect, a signal processing apparatus is provided. The signal processing apparatus includes a processor, where the processor is coupled to a memory, and the memory is configured to store a computer program The processor is configured to execute the computer program stored in the memory, so that the signal processing apparatus is enabled to perform the signal processing method in any possible implementation of the first aspect.

In a possible design, the signal processing apparatus in the third aspect may further include a transceiver. The transceiver may be a transceiver circuit or an input/output port.

In this application, the signal processing apparatus in the third aspect may be a vehicle-mounted radar, a vehicle on which the vehicle-mounted radar is disposed, or a chip (system) or another component or assembly that can be disposed on the vehicle-mounted radar. This is not limited in this application.

In addition, for a technical effect of the signal processing apparatus in the third aspect, refer to the technical effect of the signal processing method in any implementation of the first aspect. Details are not described herein again. According to a fourth aspect, a chip system is provided. The chip system includes a processor and an input/output port, the processor is configured to implement a processing function in the first aspect, and the input/output port is configured to implement a receiving/transmitting function in the first aspect.

In a possible design, the chip system further includes a memory, and the memory is configured to store program instructions and data for implementing the functions in the first aspect.

The chip system may include a chip, or may include a chip and another discrete component.

According to a fifth aspect, a detection system is provided. The detection system includes the signal processing apparatus in the second aspect or the third aspect.

According to a sixth aspect, a computer-readable storage medium is provided, and includes a computer program or instructions. When the computer program or the instructions are run on a computer, the computer is enabled to perform the signal processing method in any possible implementation of the first aspect.

According to a seventh aspect, a computer program product is provided, and includes a computer program or instructions. When the computer program or the instructions are run on a computer, the computer is enabled to perform the signal processing method in any possible implementation of the first aspect.

## BRIEF DESCRIPTION OF DRAWINGS

FIG. 1 is a schematic diagram of an architecture of a detection system according to an embodiment of this application;
FIG. 2 is a schematic diagram 1 of a structure of a signal processing apparatus according to an embodiment of this application;
FIG. 3 is a schematic flowchart of a signal processing method according to an embodiment of this application;
FIG. 4 is a schematic diagram of a signal sending and receiving processing procedure according to an embodiment of this application;
FIG. 5 is a schematic diagram 1 of a structure of signal modulation and transmission according to an embodiment of this application;
FIG. 6 is a schematic diagram 2 of a structure of signal modulation and transmission according to an embodiment of this application; and
FIG. 7 is a schematic diagram 2 of a structure of a signal processing apparatus according to an embodiment of this application.

## DESCRIPTION OF EMBODIMENTS

The following describes technical solutions of this application with reference to the accompanying drawings. Technical solutions in embodiments of this application may be applied to various detection systems, such as a vehicle-mounted radar system, a flight-mounted radar system, a satellite-mounted radar system, a ship-mounted radar system, a missile-mounted radar system, a ground-based radar system, and a radar station.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be alternatively used.

In addition, in embodiments of this application, words such as "example" or "for example" are used to indicate an example, an instance, or descriptions. Any embodiment or design scheme described as an "example" in this application should not be explained as being more preferred or having more advantages than another embodiment or design scheme. In particular, use of the word "example" is intended to present a concept in a specific manner.

In embodiments of this application, the terms "information (information)", "signal (signal)", "message (message)", "channel (channel)", and "signaling (signaling)" may sometimes be interchangeably used. It should be noted that meanings expressed by the terms are consistent when differences between the terms are not emphasized. "Of (of)", "corresponding (corresponding, relevant)", and "corresponding (corresponding)" may sometimes be mixed. It should be noted that, when differences are not emphasized, meanings to be expressed are the same.

In embodiments of this application, sometimes a subscript such as $W_1$ may be mistaken into a non-subscript form such as W1. When a difference is not emphasized, meanings to be expressed are the same.

A system architecture and a service scenario described in embodiments of this application are intended to describe the technical solutions in embodiments of this application more clearly, and do not constitute any limitation on the technical solutions provided in embodiments of this application. A person of ordinary skill in the art may know that with evolution of the architecture of the detection system and emergence of a new service scenario, the technical solutions provided in embodiments of this application are also applicable to similar technical problems.

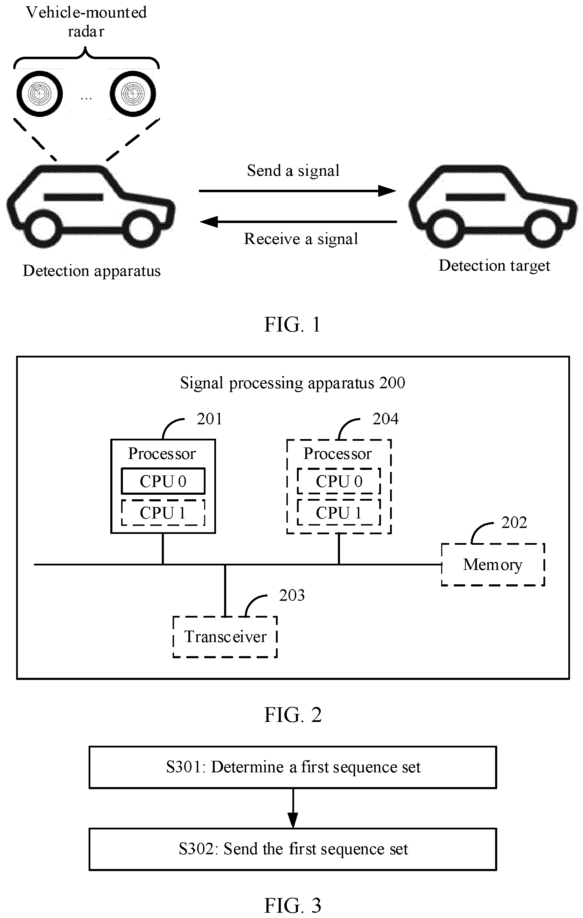

In embodiments of this application, some scenarios are described by using a scenario in a detection system shown in FIG. 1 as an example. It should be noted that the solution in embodiments of this application may also be applied to another detection system, and a corresponding name may also be replaced with a name of a corresponding function in the another detection system

For ease of understanding of embodiments of this application, a detection system that is applicable to embodiments of this application is first described in detail by using the detection system shown in FIG. 1 as an example. FIG. 1 is a schematic diagram of an architecture of a detection system to which a signal processing method according to an embodiment of this application is applicable. As shown in FIG. 1, the detection system includes a detection apparatus and a detection target. The detection apparatus is configured to: determine and send an electromagnetic wave signal, and detect a reflected signal of the detection target, to determine one or more of a distance, a velocity, or an azimuth of the detection target.

For example, the detection apparatus may determine a distance between the detection apparatus and the detection target by comparing a transmit signal and a receive signal, for example, determining a time difference between the transmit signal and the receive signal. For another example, the detection apparatus may determine the velocity of the detection target by continuously sensing the distance of the detection target or by using a Doppler effect. Further, the detection apparatus may determine the azimuth (angle) of the detection target by using a plurality of transmitters and/or a plurality of receivers.

The detection apparatus may include a vehicle with a detection function, a vehicle-mounted module that may be disposed on the vehicle and has a detection function, a vehicle-mounted module, a vehicle-mounted component, a vehicle-mounted chip, or a vehicle-mounted unit, for example, various vehicle-mounted radars such as a vehicle-mounted millimeter wave radar, a vehicle-mounted infrared radar, and a phase modulation continuous wave (phase modulation continuous wave, PMCW) multiple-input multiple-output (multiple-input multiple-output, MIMO) radar. An implementation corresponding to the detection apparatus is not specifically limited in this embodiment of this application. A vehicle-mounted radar is used as an example below for description.

It should be noted that the detection system shown in FIG. 1 includes a processor with a processing function or a controller, such as a signal processing apparatus 200 or a processor 201 shown in FIG. 2. The processor or the controller is configured to perform the signal processing method provided in embodiments of this application. For details, refer to the following method embodiments. Details are not described herein again.

The detection target may include all objects that are around the detection apparatus and that can reflect a transmit signal of the detection apparatus, and may be mobile or still, for example, another vehicle, a pedestrian, a bicycle, a motorcycle, a tree, a building, various traffic signs, or a wire pole. An implementation of the detection target is not specifically limited in this embodiment of this application.

For example, FIG. 2 is a schematic diagram of a structure of a signal processing apparatus that may be used to perform the signal processing method provided in embodiments of this application. The signal processing apparatus may be the foregoing detection apparatus with a detection function, such as a vehicle-mounted module, a vehicle-mounted module, a vehicle-mounted component, a vehicle-mounted chip, a vehicle-mounted unit, or a vehicle-mounted radar, or a chip (system) or another component or assembly that can be disposed on the various detection apparatuses.

As shown in FIG. 2, the signal processing apparatus 200 may include a processor 201 and a transceiver 203. The processor 201 is coupled to the transceiver 203. Optionally, the signal processing apparatus 200 may further include a memory 202. The processor 201 may be coupled to the memory 202. In this embodiment of this application, the foregoing "coupling" means that there is an electrical signal connection between two components, for example, the two components may be connected by using a communication bus.

The components of the signal processing apparatus 200 are specifically described below with reference to FIG. 2.

The processor 201 is a control center of the signal processing apparatus 200, and may be one processor, or may be a general name of a plurality of processing elements. For example, the processor 201 is one or more central processing units (central processing units, CPUs), or an application-specific integrated circuit (application specific integrated circuit, ASIC), or may be configured as one or more integrated circuits implementing embodiments of this application, for example, one or more microprocessors (digital signal processors, DSPs) or one or more field programmable gate arrays (field programmable gate arrays, FPGAs).

Optionally, the processor 201 may perform various functions of the signal processing apparatus 200 by running or executing a software program stored in the memory 202 and invoking data stored in the memory 202.

In specific implementation, in an embodiment, the processor 201 may include one or more central processing units (central processing unit, CPU), for example, a CPU 0 and a CPU 1 shown in FIG. 2.

In specific implementation, in an embodiment, the signal processing apparatus 200 may alternatively include a plurality of processors, for example, the processor 201 and a processor 204 shown in FIG. 2. Each of these processors may be a single-core processor (single-CPU), or may be a multi-core processor (multi-CPU). The processor herein may be one or more communication devices, circuits, and/or processing cores configured to process data (for example, computer program instructions).

The memory 202 may be a read-only memory (read-only memory, ROM) or another type of static storage communication device that can store static information and instructions, or a random access memory (random access memory, RAM) or another type of dynamic storage communication device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compact disc, a laser disc, an optical disc, a digital versatile disc, a Bluray disc, and the like), a magnetic disk storage medium or another magnetic storage communication device, or any other medium that can be used to carry or store expected program code in a form of an instruction or a data structure and that can be accessed by a computer. However, the memory 202 is not limited thereto. The memory 202 may be integrated with the processor 201, or may exist independently and is coupled to the processor 201 by using an input/output port (not shown in FIG. 2) of the signal processing apparatus 200. This is not specifically limited in this embodiment of this application.

The memory 202 may be configured to store a software program for performing the signal processing method in embodiments of this application, and the processor 201 controls execution of the software program For a specific implementation of the signal processing method, refer to the following method embodiments. Details are not described herein again.

Optionally, the memory may be further configured to store original collected data such as data collected by a sensor, intermediate data obtained through calculation such as a calculation result of a matching filter or a correlator, and a detection result such as a distance, a velocity, and an azimuth of a detection target.

The transceiver 203 is configured to send a signal to the signal processing apparatus 200 and receive a reflected signal of the detection target, or is used for communication between the signal processing apparatus 200 and a wireless network or another communication apparatus. In addition, the transceiver 203 may include a receiver and a transmitter (not shown separately in FIG. 2). The receiver is configured to implement a receiving function, and the transmitter is configured to implement a sending function. In addition, the transceiver 203 may be integrated with the processor 201, or may exist independently and is coupled to the processor 201 by using the input/output port (not shown in FIG. 2) of the signal processing apparatus 200. This is not specifically limited in this embodiment of this application.

In a possible design solution, the signal processing apparatus 200 may be a vehicle-mounted radar with a processing function. After generating a first sequence set (that is, performing S301), the vehicle-mounted radar controls a transmit antenna of the vehicle-mounted radar to send the first sequence set (that is, performing S302).

In another possible design solution, the signal processing apparatus 200 may alternatively be a vehicle-mounted controller coupled to a vehicle-mounted radar. For example, the vehicle-mounted radar is coupled to the vehicle-mounted controller by using an input/output port of the vehicle-mounted controller. In this way, after generating a first sequence set (that is, performing S301), the vehicle-mounted controller may send the first sequence set to the vehicle-mounted radar through the input/output port of the vehicle-mounted controller (that is, performing S302), and then a transmit antenna of the vehicle-mounted radar sends the first sequence set.

Optionally, the signal processing apparatus 200 may alternatively be a chip (system) or another component or assembly that can be disposed on the vehicle-mounted radar with the processing function or the vehicle-mounted controller coupled to the vehicle-mounted radar, or a device such as a vehicle that includes the vehicle-mounted radar with the processing function or the vehicle-mounted controller coupled to the vehicle-mounted radar.

For a specific implementation of S301 and S302, refer to the following method embodiments. Details are not described herein again.

It should be noted that the structure of the signal processing apparatus 200 shown in FIG. 2 does not constitute a limitation on the signal processing apparatus. An actual signal processing apparatus may include more or fewer components than those shown in the figure, or combine some components, or have different component arrangement. The signal processing method provided in embodiments of this application is specifically described below with reference to FIG. 3 to FIG. 6.

FIG. 3 is a schematic flowchart of a signal processing method according to an embodiment of this application. The signal processing method is applicable to the detection system shown in FIG. 1. A signal processing apparatus is used as an example below for detailed description.

As shown in FIG. 3, the signal processing method includes the following steps.

S301: The signal processing apparatus determines a first sequence set.

The first sequence set includes at least one first sequence, and the at least one first sequence is an orthogonal sequence obtained after fast-time dimension coding and slow-time dimension coding. For example, the first sequence set may include M first sequences, and M is a quantity of transmit antennas. Detailed descriptions are provided below.

For example, that the signal processing apparatus determines the first sequence set in S301 may include: The signal processing apparatus determines the first sequence set based on a second sequence set. The second sequence set may include $M_a$ first sequences, and the $M_a$ first sequences may be all available transmit sequences of a vehicle-mounted radar, in other words, $M_a$ is a total quantity of all available transmit sequences of the vehicle-mounted radar, and $M_a$ is greater than or equal to the quantity M of transmit antennas

The total quantity $M_a$ of available transmit sequences of the vehicle-mounted radar may be determined based on a maximum detection range and a maximum detection velocity of the vehicle-mounted radar. The following steps 1 to 3 may be specifically included.

Step 1: Determine a minimum sequence length of an available transmit sequence of the vehicle-mounted radar based on the maximum detection range of the vehicle-mounted radar and range resolution.

Specifically, the minimum sequence length may be determined based on the following formula (1):

$$L_{min} = \left\lceil R_{max} / R_d \right\rceil \tag{1}$$

$L_{min}$ is a minimum sequence length, $R_{max}$ is the maximum detection range, $R_d$ is the range resolution, and $\lceil \ \rceil$ means rounding up.

The maximum detection range (also referred to as an unambiguous detection range) and the range resolution are two technical indicators in a distance detection range of the vehicle-mounted radar, and may be determined based on a function mode or a scenario requirement of the vehicle-mounted radar. Generally, radars are classified into a short-range radar (a typical value of $R_{max}$ is 70 meters), a medium-range radar (a typical value of $R_{max}$ is 120 meters), and a long-range radar (a typical value of $R_{max}$ is 250 meters) based on function modes. For example, in a short-range detection scenario, for example, a scenario such as automatic parking, blind spot identification, and parking door opening assistance, a detection range usually needs to be relatively close but range resolution needs to be relatively high; in other words, in this case, values of both the maximum detection range and the range resolution are relatively small. For another example, in a long-range detection scenario, for example, a scenario such as adaptive cruising, collision warning, or automatic emergency braking, a detection range usually needs to be relatively long but a requirement for the range resolution can be relaxed; in other words, in this case, values of both the maximum detection range and the range resolution are relatively large. For still another example, in a medium-range detection scenario, for example, a scenario such as lane changing assistance or active lane control, the detection range and the range resolution usually need to be moderate; in other words, in this case, values of the maximum detection range and the range resolution are each between the value in the short-range detection scenario and the value in the long-range detection scenario.

Step 2: Determine a maximum sequence length of the available transmit sequence of the vehicle-mounted radar based on a maximum detection velocity of the vehicle-mounted radar.

Specifically, the maximum sequence length may be determined based on the following formula (2):

$$L_{max} = \left\lfloor c / (4 f_c * T_c * V_{max}) \right\rfloor \tag{2}$$

$L_{max}$ is the maximum sequence length, C is a propagation velocity of an electromagnetic wave, $f_c$ is a carrier frequency, $T_c$ is a code length, $V_{max}$ is the maximum detection velocity, and $\lfloor \ \rfloor$ means rounding down.

Similar to the maximum detection range and the range resolution in the foregoing step 1, the maximum detection velocity (also referred to as an unambiguous detection velocity) is a technical indicator in a velocity detection range of the vehicle-mounted radar, and may be determined based on a function mode or a scenario requirement of the vehicle-mounted radar. A radar is used as an example for description. Generally, radars may be classified into a radar with a function of detecting a low-velocity target (a typical value of $V_{max}$ may be 30 m/s) and a radar with a function of detecting a high-velocity target (a typical value of $V_{max}$ may be 80 m/s) based on a function mode, a vehicle motion status, a radar arrangement position, traffic rules, and a motion feature of the target. For example, when a vehicle velocity is relatively low, for example, in a scenario of automatic parking, blind spot identification, or parking door opening assistance, a velocity of a detection target is usually relatively low. For another example, in a process of driving on a highway, the radar needs to have a relatively large unambiguous detection velocity range.

It should be noted that step 2 may be performed after step 1 is performed; may be performed before step 1 is performed; or step 1 and step 2 may be performed simultaneously. This is not specifically limited in this embodiment of this application.

Step 3: Determine a total quantity of available transmit sequences of the vehicle-mounted radar based on the maximum sequence length and the minimum sequence length.

Specifically, the total quantity of available transmit sequences of the vehicle-mounted radar, such as a quantity of first sequences included in the second sequence set, may be determined based on the following formula (3):

$$M_a = \left\lfloor L_{max} / L_{min} \right\rfloor \tag{3}$$

$M_a$ is the total quantity of available transmit sequences of the vehicle-mounted radar, and may be, for example, the quantity of first sequences included in the second sequence set.

It should be understood that if the formula (1) and the formula (2) are substituted into the formula (3), the following formula (4) may be obtained:

$$M_a = \left\lfloor \left\lfloor c / (4 f_c * T_c * V_{max}) \right\rfloor / \left\lceil R_{max} / R_d \right\rceil \right\rfloor \tag{4}$$

$M_a$ is the total quantity of available transmit sequences of the vehicle-mounted radar, C is a propagation velocity of an electromagnetic wave, $f_c$ is a carrier frequency, $T_c$ is a code length, $V_{max}$ is the maximum detection velocity, $R_{max}$ is the maximum detection range, $R_d$ is the range resolution, $\lfloor \ \rfloor$ means rounding down, and $\lceil \ \rceil$ means rounding up.

In other words, after the maximum detection range, the range resolution, and the maximum detection velocity of the signal processing apparatus are determined based on a function mode or a scenario requirement of the signal processing apparatus, the maximum sequence length and the minimum sequence length may not be calculated based on the foregoing formulas (1) and (2), but the total quantity of available transmit sequences is directly calculated based on the formula (4). A specific implementation of calculating the total quantity of available transmit sequences is not limited in this embodiment of this application.

It should be noted that the total quantity of available transmit sequences needs to be greater than or equal to the quantity of transmit antennas; in other words, the following formula (5) is met:

$$M_a \geq M \tag{5}$$

In other words, the foregoing step 1 to step 3 may need to be iterated for a plurality of times to determine a proper value of the total quantity of available transmit sequences. For example, if $M_{a1} < M$ is obtained after performing calculation based on $R_{max1}$ and $V_{max1}$ corresponding to a first working mode, that is, the foregoing formula (5) cannot be met, $R_{max2}$ and/or $V_{max2}$ corresponding to a second working mode may be selected. $R_{max2} < R_{max1}$ and/or $V_{max2} < V_{max1}$. Then, the foregoing step 1 to step 3 are performed again. Certainly, if the second working mode still does not meet the foregoing formula (5), $R_{max3}$ and/or $V_{max3}$ with a smaller value corresponding to a third working mode may continue to be selected until $M_a$ obtained through calculation meets the formula (5). After the foregoing step 1 to step 3 are performed, the following step 4 to step 6 may be performed.

Step 4: The signal processing apparatus determines a quantity of fast-time dimension sequences based on a quantity of slow-time dimension sequences.

The quantity of slow-time dimension sequences may be determined based on a system orthogonality requirement. The system orthogonality requirement means that, to ensure that transmit signals of different transmit antennas can be distinguished from each other with high performance at a receive end, the transmit signals of the different transmit antennas are required to be orthogonal, or otherwise, crosstalk between signals of different transmit-receive channels is caused, and consequently detection accuracy is affected. Because costs of the solution of implementing orthogonality by using the slow-time dimension sequence are lower, a relatively large quantity of slow-time dimension sequences and a relatively small quantity of fast-time dimension sequences are preferably used while orthogonality and a system detection requirement are ensured, to be specific, the quantity of slow-time dimension sequences is greater than the quantity of fast-time dimension sequences, so that the quantity of slow-time dimension sequences can be determined.

In a possible design solution, the signal processing apparatus may determine the quantity of fast-time dimension sequences based on the total quantity of available transmit sequences and the quantity of slow-time dimension sequences. For example, the signal processing apparatus may determine the quantity of fast-time dimension sequences based on the following formula (6):

$$M_1 = \left\lfloor M_a / M_2 \right\rfloor \tag{6}$$

$\lfloor \ \rfloor$ means rounding down. Alternatively, in another possible design solution, the signal processing apparatus may determine the quantity of fast-time dimension sequences based on a quantity of available transmit antennas and the quantity of slow-time dimension sequences. For example, the signal processing apparatus may determine the quantity of fast-time dimension sequences based on the following formula (7):

$$M_1 = \left\lceil M / M_2 \right\rceil \tag{7}$$

$\lceil \ \rceil$ means rounding up.

Step 5: The signal processing apparatus determines $M_1$ fast-time dimension sequences and $M_2$ slow-time dimension sequences.

The $M_1$ fast-time dimension sequences may be considered as a sequence set obtained through fast-time dimension coding, and the $M_2$ slow-time dimension sequences may be considered as a sequence set obtained through slow-time dimension coding. Descriptions are separately provided below.

Optionally, the sequence set obtained through fast-time dimension coding includes $M_1$ first orthogonal sequences, the $M_1$ first orthogonal sequences may be sequences whose period cross-correlation value is zero in a valid delay, and the valid delay is less than or equal to a delay corresponding to a sequence length of the $M_1$ first orthogonal sequences. Optionally, the sequence set obtained through slow-time dimension coding includes $M_2$ second orthogonal sequences, and the $M_2$ second orthogonal sequences are Hadamard sequences or multi-carrier orthogonal sequences whose period cross-correlation value is zero in a case of a zero delay.

For example, it is assumed that a sequence length of an orthogonal sequence is 1000, and a code length is $T_c$, that is, the orthogonal sequence needs to be sent on a time length corresponding to 1000 code lengths. In this case, a value of the valid delay may be any value in 0, $T_c$, $2 \times T_c$, $3 \times T_c$, $4 \times T_c$, ..., and $999 \times T_c$, where a valid delay whose value is 0 may also be referred to as a zero delay. In other words, orthogonality of the sequences whose period cross-correlation value is zero in the case of a zero delay is weaker than orthogonality of the orthogonal sequences whose period cross-correlation value is zero in the valid delay, and is more susceptible to impact from interference from a neighboring channel such as a wireless channel corresponding to another transmit antenna/receive antenna port, and consequently detection accuracy deteriorates.

For a method for generating the $M_1$ fast-time dimension sequences and the $M_2$ slow-time dimension sequences, refer to a conventional technology. Details are not described in this embodiment of this application.

Step 6: The signal processing apparatus determines a second sequence set.

The second sequence set may include $M_a$ first sequences, and the $M_a$ first sequences are sequences obtained after slow-time dimension coding is performed on the $M_1$ fast-time dimension sequences by using the $M_2$ slow-time dimension sequences.

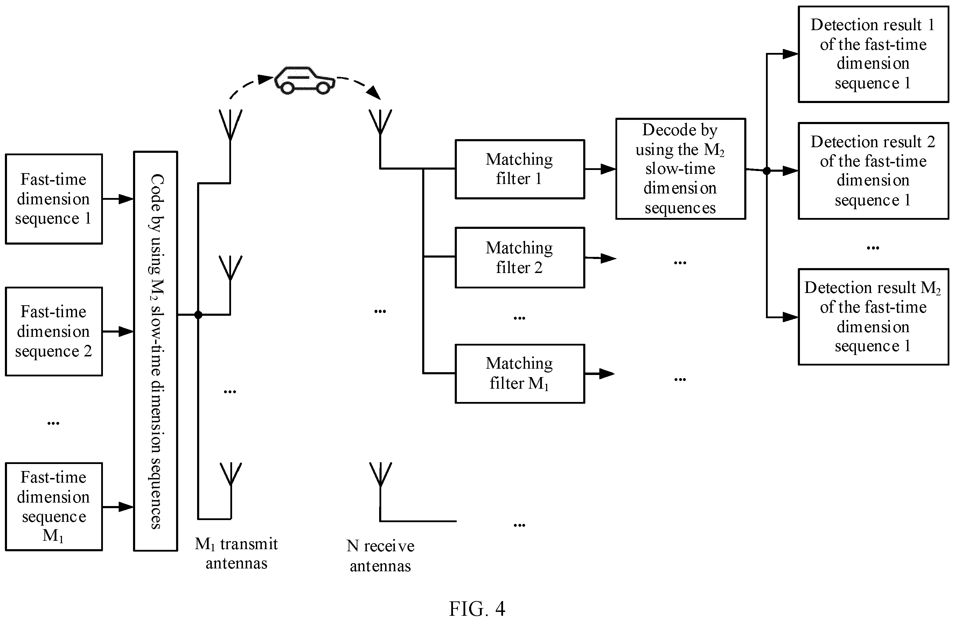

For example, FIG. 4 is a schematic diagram of a signal sending and receiving processing procedure according to an embodiment of this application. As shown in FIG. 4, at a transmit end, the signal processing apparatus may perform slow-time dimension coding on the $M_1$ fast-time dimension sequences by using the $M_2$ slow-time dimension sequences to generate the second sequence set, that is, generate the $M_a$ first sequences, and then select M first sequences from the $M_a$ first sequences, and send the M first sequences by using M transmit antennas of the vehicle-mounted radar. Because the quantity M of transmit antennas is less than or equal to the total quantity $M_a$ of available sequences, the first sequence set may be considered as a subset of the second sequence set.

Optionally, the determining a second sequence set may include: If a coding scheme of the $M_1$ fast-time dimension sequences is the same as a coding scheme of the $M_2$ slow-time dimension sequences, the $M_a$ first sequences may be a Kronecker product (Kronecker product) of the $M_1$ fast-time dimension sequences and the $M_2$ slow-time dimension sequences. For a specific implementation of the Kronecker product, refer to the conventional technology. Details are not described in this embodiment of this application.

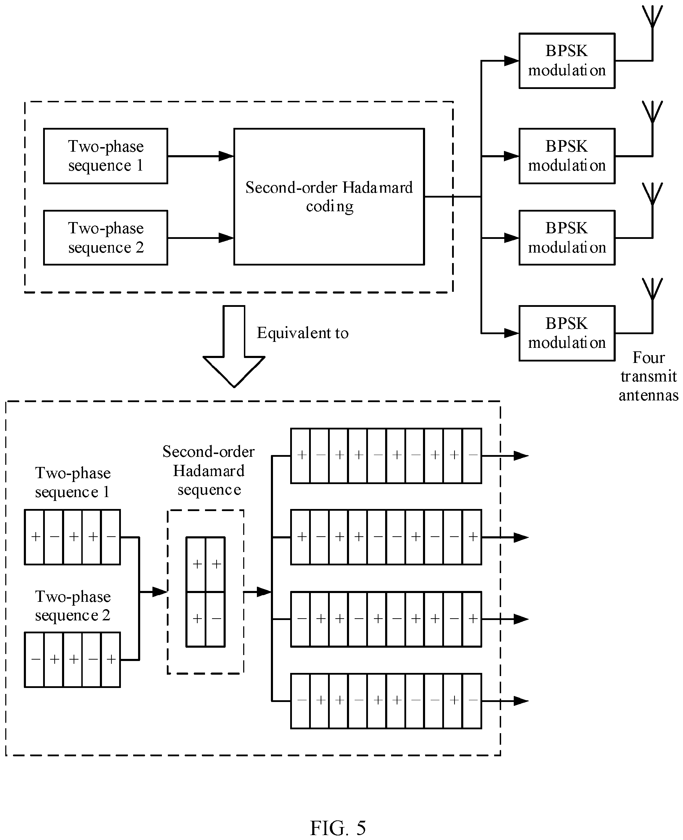

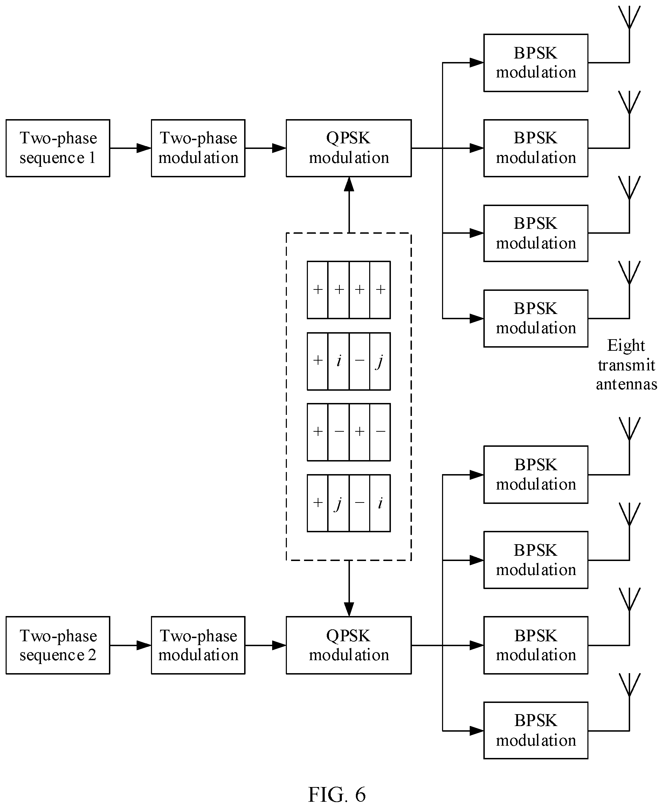

When the coding scheme of the $M_1$ fast-time dimension sequences is the same as the coding scheme of the $M_2$ slow-time dimension sequences, a fast-time dimension coding procedure and a slow-time dimension coding procedure may be simplified; in other words, the fast-time dimension coding procedure and the slow-time dimension coding procedure may be combined into one step for execution. For example, two operations, that is, fast-time dimension coding and slow-time dimension coding shown in FIG. 4 may be combined into one step for execution. Two examples shown in FIG. 5 and FIG. 6 are used for description below.

For example, FIG. 5 is a schematic diagram 1 of a structure of signal modulation and transmission according to an embodiment of this application. With reference to FIG. 4, as shown in FIG. 5, the quantity of transmit antennas is 4, and the $M_1$ fast-time dimension sequences are two two-phase sequences, namely, a two-phase sequence 1 and a two-phase sequence 2. A cross-correlation between the two-phase sequence 1 and the two-phase sequence 2 is zero in all valid delays. The $M_2$ slow-time dimension sequences are also two-phase coding sequences, for example, second-order Hadamard (Hadamard) sequences, and a cross-correlation between any two Hadamard sequences is zero in a case of a zero delay. "+" and "-" shown in FIG. 5 respectively correspond to "radian 0" and "radian $\pi$"; to be specific, 0-phase modulation and $\pi$-phase modulation are performed on a to-be-modulated sequence.

When a quantity of phases of fast-time dimension coding is equal to a quantity of phases of slow-time dimension coding, it may be considered as that the coding scheme of the fast-time dimension sequences is the same as the coding scheme of the slow-time dimension sequences, and the fast-time dimension coding and the slow-time dimension coding may be combined; and this is equivalent to modulating a long sequence. Therefore, as shown in FIG. 5, four sequences are obtained after the foregoing two fast-time dimension orthogonal sequences are modulated by using a second-order slow-time dimension sequence, and after binary phase shift keying (binary phase shift keying, BPSK) modulation, the four sequences are respectively transmitted by using four transmit antennas

Optionally, when the quantity of phases of the fast-time dimension coding is less than the quantity of phases of the slow-time dimension coding, and the quantity of phases of the slow-time dimension coding is a multiple of the quantity of phases of the fast-time dimension coding, it may also be considered as that the coding scheme of the fast-time dimension sequences is the same as the coding scheme of the slow-time dimension sequences, and the fast-time dimension coding and the slow-time dimension coding may also be combined; and this is equivalent to modulating a long sequence.

For example, it is assumed that the quantity of transmit antennas is 8, two two-phase sequences are used for the fast-time dimension sequence, and four four-phase sequences are used for the slow-time dimension sequence. The fast-time dimension sequence may use two-phase modulation, for example, any one of BPSK, minimum phase shift keying (minimum phase shift keying, MSK), or Gaussian minimum phase shift keying (Gaussian minimum phase shift keying, GMSK), and the slow-time dimension sequence uses quadrature phase shift keying (quadrature phase shift keying, QPSK) modulation. In this case, the fast-time dimension sequence may be considered as a special four-phase sequence. For example, a two-phase sequence {+, -, +, -} may be changed into a four-phase sequence such as {-, +, -, +}, {i, j, i, j}, or {j, i, j, i}, or may still keep original phases unchanged, that is, {+, -, +, -}. "+" represents a 0-phase, "i" represents a $\pi/2$-phase, "-" represents a $\pi$-phase, and "j" represents a $3\pi/2$-phase. To be specific, phase rotation of a radian 0, a radian $\pi/2$, a radian $\pi$, and a radian $3\pi/2$ is separately correspondingly performed on the original two-phase sequence. Then, based on the method shown in FIG. 5, the changed four-phase sequence and the slow-time dimension sequence may be combined for four-phase modulation such as QPSK modulation, to generate eight transmit sequences. It should be understood that, in this case, a modulation solution of two phases may alternatively be used. To be specific, two-phase modulation is separately performed on the fast-time dimension sequence in a first phase, and four-phase modulation is performed on the modulated fast-time dimension sequence in a second phase, to generate eight transmit sequences.

For example, FIG. 6 is a schematic diagram 2 of a structure of signal modulation and transmission according to an embodiment of this application. With reference to FIG. 4, as shown in FIG. 6, the quantity of transmit antennas is 8, and the $M_1$ fast-time dimension sequences are two two-phase sequences, namely, a two-phase sequence 1 and a two-phase sequence 2. A cross-correlation between the two-phase sequence 1 and the two-phase sequence 2 is zero in all valid delays. The $M_2$ slow-time dimension sequences are four four-phase sequences, and a cross-correlation between any two four-phase sequences is zero in a case of a zero delay. As shown in FIG. 6, after two-phase modulation is performed on two two-phase orthogonal sequences, the two two-phase orthogonal sequences enter a QPSK modulation module for slow-time dimension modulation, to generate eight transmit sequences. In this example, discrete Fourier transform coding is used in QPSK modulation.

It should be noted that, if the coding scheme of the fast-time dimension sequence is different from the coding scheme of the slow-time dimension sequence, the fast-time dimension coding and the slow-time dimension coding need to be separately performed, that is, modulation of two stages needs to be performed. For specific implementation, refer to the coding modulation procedure shown in FIG. 6. Details are not described again in this embodiment of this application.

S302: The signal processing apparatus sends the first sequence set.

Specifically, after the coding modulation procedure shown in any one of FIG. 4 to FIG. 6 is performed, the $M_1$ fast-time dimension sequences may be coated with one layer of slow-time dimension coding, and are sent by using $M_1$ transmit antennas. "Being coated with one layer of slow-time dimension coding" means that each fast-time dimension sequence is coded again by using the slow-time dimension sequence. For specific implementation, refer to the foregoing processing procedure at the transmit end in FIG. 4 to FIG. 6. Details are not described herein again.

It should be noted that after a transmit signal that carries any sequence in the first sequence set reaches the detection target, the transmit signal may be reflected back to the signal processing apparatus, and the signal processing apparatus may receive the reflected signal, and obtain a detection result based on the reflected signal.

As shown in FIG. 4, a receive channel at the receive end is used as an example. The receive channel includes $M_1$ matching filters such as a matching filter 1 to a matching filter $M_1$. The $M_1$ matching filters respectively perform a matching filtering operation on the $M_1$ fast-time dimension sequences, to obtain first detection results of the $M_1$ fast-time dimension sequences. Then, each first detection result is decoded by using the $M_2$ slow-time dimension sequences, to obtain $M_2$ second detection results corresponding to the first detection result, such as a detection result 1 of a fast-time dimension sequence 1 to a detection result $M_2$ of the fast-time dimension sequence 1 shown in FIG. 4. In other words, when N receive channels detect the $M_1$ fast-time dimension sequences and $M_2$ slow-time dimension decoding, a matching and filtering operation needs to be performed for $N \times M_1$ times to obtain $N \times M_1$ first detection results, and slow-time dimension decoding needs to be performed for $N \times M_1 \times M_2$ times to obtain $N \times M_1 \times M_2$ second detection results.

Then, the signal processing apparatus may determine one or more of a distance, a velocity, or an azimuth of the detection target based on the second detection result. For specific implementation, refer to the conventional technology. Details are not described again in this embodiment of this application.

It should be noted that, for the examples of two signal modulation and transmission scenario s shown in FIG. 5 or FIG. 6, a processing procedure similar to that at the receive end shown in FIG. 4 may alternatively be used to obtain the first detection result and the second detection result, to determine one or more of a distance, a velocity, or an azimuth of the detection target. Details are not described herein again.

In a possible design solution, the signal processing apparatus in the foregoing method embodiments may be a vehicle-mounted radar with a processing function. After generating the first sequence set (S301), the vehicle-mounted radar controls a transmit antenna of the vehicle-mounted radar to send the first sequence set (S302).

In another possible design solution, the signal processing apparatus in the foregoing method embodiments may alternatively be a vehicle-mounted controller coupled to a vehicle-mounted radar. For example, the vehicle-mounted radar is coupled to the vehicle-mounted controller by using an input/output port of the vehicle-mounted controller. In this way, after generating the first sequence set (S301), the vehicle-mounted controller may send the first sequence set to the vehicle-mounted radar through the input/output port of the vehicle-mounted controller (S302), and then a transmit antenna of the vehicle-mounted radar sends the first sequence set.

Optionally, the signal processing apparatus in the foregoing method embodiments may alternatively be a chip (system) or another component or assembly that can be disposed on the vehicle-mounted radar with the processing function or the vehicle-mounted controller coupled to the vehicle-mounted radar, or a device such as a vehicle that includes the vehicle-mounted radar with the processing function or the vehicle-mounted controller coupled to the vehicle-mounted radar.

Based on the signal processing method in the foregoing method embodiments, a detection signal may be transmitted by using the orthogonal sequence obtained after fast-time dimension coding and slow-time dimension coding. In one aspect, compared with a separate slow-time dimension coding solution, in this signal processing method, a smaller quantity of slow-time dimension sequences can be used to avoid a problem that orthogonality between a relatively large quantity of slow-time dimension sequences deteriorates when the detection target moves at a high velocity, so that orthogonality between detection signals transmitted by different transmit antennas can be ensured, to increase angular resolution of target detection. In addition, compared with a separate fast-time dimension coding solution, in this signal processing method, a quantity of fast-time dimension sequences can be reduced to lighten workload of the receive end. For example, a quantity of matching filtering operations or correlation operations for the fast-time dimension sequences can be reduced. In this way, a smaller quantity of matching filters or correlators may be disposed at the receive end, to reduce technical complexity and hardware costs of the signal processing apparatus.

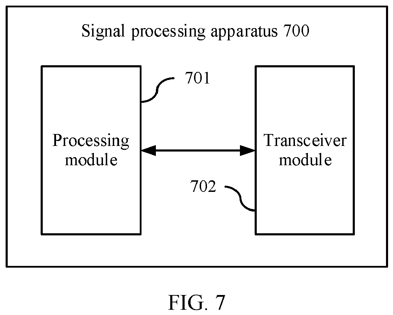

The signal processing method provided in embodiments of this application is described in detail above with reference to FIG. 3 to FIG. 6. Another signal processing apparatus provided in an embodiment of this application is described in detail below with reference to FIG. 7.

FIG. 7 is a schematic diagram 2 of a structure of a signal processing apparatus according to an embodiment of this application. The signal processing apparatus is applicable to the detection system shown in FIG. 1, to perform the signal processing method shown in FIG. 3. For ease of description, FIG. 7 shows only main components of the signal processing apparatus.

As shown in FIG. 7, a signal processing apparatus 700 includes a processing module 701 and a transceiver module 702.

The processing module 701 is configured to determine a first sequence set. The first sequence set includes at least one first sequence, and the at least one first sequence is an orthogonal sequence obtained after fast-time dimension coding and slow-time dimension coding.

The transceiver module 702 is configured to send the first sequence set.

In a possible design solution, the processing module 701 is further configured to: determine $M_1$ fast-time dimension sequences, and determine a second sequence set. The second sequence set may include $M_a$ first sequences, the $M_a$ first sequences may be sequences obtained after slow-time dimension coding is performed on the $M_1$ fast-time dimension sequences by using $M_2$ slow-time dimension sequences, $M_a = M_1 \times M_2$, $M_a$ is greater than or equal to M, and M is a quantity of transmit antennas

In another possible design solution, the processing module 701 is further configured to determine the first sequence set based on the $M_a$ first sequences, where the first sequence set may include M first sequences.

Optionally, the processing module 701 is further configured to determine a quantity of fast-time dimension sequences based on the quantity of transmit antennas and a quantity of slow-time dimension sequences, where

$$M_1 = \left\lceil M / M_2 \right\rceil$$ , and $\lceil\ \rceil$ means rounding up.

Optionally, if a coding scheme of the $M_1$ fast-time dimension sequences is the same as a coding scheme of the $M_2$ slow-time dimension sequences, the $M_a$ first sequences may be a Kronecker product of the $M_1$ fast-time dimension sequences and the $M_2$ slow-time dimension sequences.

In a possible design solution, the processing module 701 is further configured to determine, based on a maximum detection range and a maximum detection velocity, a quantity of first sequences included in the second sequence set,

where $$M_a = \left\lfloor \left\lfloor c / (4 f_c * T_c * V_{max}) \right\rfloor / \left\lceil R_{max} / R_d \right\rceil \right\rfloor$$ , $M_a$ is the quantity of first sequences included in the second sequence set, C is a propagation velocity of an electromagnetic wave, $f_c$ is a carrier frequency, $T_c$ is a code length, $V_{max}$ is the maximum detection velocity, $R_{max}$ is the maximum detection range, $R_d$ is range resolution, $\lfloor\ \rfloor$ means rounding down, and $\lceil\ \rceil$ means rounding up.

Optionally, a sequence set obtained through fast-time dimension coding includes $M_1$ first orthogonal sequences, the $M_1$ first orthogonal sequences are sequences whose period cross-correlation value is zero in a valid delay, and the valid delay is less than or equal to a delay corresponding to a sequence length of the $M_1$ first orthogonal sequences. Correspondingly, a sequence set obtained through slow-time dimension coding includes $M_2$ second orthogonal sequences, and the $M_2$ second orthogonal sequences are Hadamard sequences or multi-carrier orthogonal sequences whose period cross-correlation value is zero in a case of a zero delay.

In addition, the transceiver module 702 is further configured to receive a reflected signal of a detection target after the transceiver module 702 sends the first sequence set. Correspondingly, the processing module 701 is further configured to obtain a detection result based on the reflected signal, for example, one or more of a distance, a velocity, or an azimuth of the detection target.

Optionally, the signal processing apparatus 700 shown in FIG. 7 may further include a storage module (not shown in FIG. 7), and the storage module stores a program or instructions. When the processing module 701 executes the program or the instructions, the signal processing apparatus 700 may be enabled to perform the signal processing method shown in FIG. 3.

It should be noted that the signal processing apparatus 700 may be the detection apparatus shown in FIG. 1 or the signal processing apparatus 200 shown in FIG. 2, or may be a chip (system) or another component or assembly that is disposed on the detection apparatus or the signal processing apparatus 200. This is not limited in this embodiment of this application.

In addition, for a technical effect of the signal processing apparatus 700, refer to the technical effect of the signal processing method shown in FIG. 3. Details are not described herein again.

An embodiment of this application provides a chip system The chip system includes a processor and an input/output port, the processor is configured to implement the processing function in the foregoing method embodiments, and the input/output port is configured to implement the receiving/transmitting function in the foregoing method embodiments. In a possible design, the chip system further includes a memory, and the memory is configured to store program instructions and data for implementing the functions in the foregoing method embodiments.

The chip system may include a chip, or may include a chip and another discrete component.

An embodiment of this application provides a detection system The detection system includes the foregoing signal processing apparatus and one or more detection targets.

An embodiment of this application provides a computer-readable storage medium The computer-readable storage medium stores computer instructions. When the computer instructions are run on a computer, the computer is enabled to perform the signal processing method in the foregoing method embodiments.

An embodiment of this application provides a computer program product that includes instructions, and the computer program product includes a computer program or instructions. When the computer program or the instructions are run on a computer, the computer is enabled to perform the signal processing method in the foregoing method embodiments. It should be understood that the processor in embodiments of this application may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative description, many forms of random access memories (random access memories, RAMs) may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When software is used to implement the embodiments, all or some of the foregoing embodiments may be implemented in a form of a computer program product. The computer program product includes one or more computer instructions or computer programs. When the program instructions or the computer programs are loaded or executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium The semiconductor medium may be a solid-state drive. It should be understood that the term "and/or" in this specification is merely an association relationship that describes associated objects, and represents that there may be three relationships. For example, A and/or B may represent three cases: only A exists, both A and B exist, and only B exists. A and B may be singular numbers or plural numbers. In addition, the character "/" in this specification generally indicates that the association objects are in an "or" relationship, but may also indicate an "and/or" relationship. For details, refer to the foregoing and subsequent descriptions.

In this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions in embodiments. In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal processing method, comprising:

   determining a first sequence set, wherein the first sequence set comprises at least one first sequence, and the at least one first sequence is an orthogonal sequence obtained after fast-time dimension coding and slow-time dimension coding; and
   sending the first sequence set.

2. The signal processing method according to claim 1, further comprising:

   determining $M_1$ fast-time dimension sequences; and
   determining a second sequence set, wherein the second sequence set comprises $M_a$ first sequences, the $M_a$ first sequences are sequences obtained after slow-time dimension coding is performed on the $M_1$ fast-time dimension sequences by using $M_2$ slow-time dimension sequences, $M_a = M_1 \times M_2$, $M_a$ is greater than or equal to M, and M is a quantity of transmit antennas

3. The signal processing method according to claim 2, wherein the determining a first sequence set comprises:
   determining the first sequence set based on the $M_a$ first sequences, wherein the first sequence set comprises M first sequences.

4. The signal processing method according to claim 2 or 3, further comprising:

   determining a quantity of fast-time dimension sequences based on the quantity of transmit antennas and a quantity of slow-time dimension sequences, wherein

   $$M_1 = \lceil M / M_2 \rceil$$ , and $\lceil \ \rceil$ means rounding up.

5. The signal processing method according to any one of claims 2 to 4, wherein the determining a second sequence set comprises:
   if a coding scheme of the $M_1$ fast-time dimension sequences is the same as a coding scheme of the $M_2$ slow-time dimension sequences, the $M_a$ first sequences are a Kronecker product of the $M_1$ fast-time dimension sequences and the $M_2$ slow-time dimension sequences.

6. The signal processing method according to any one of claims 2 to 5, further comprising:

determining, based on a maximum detection range and a maximum detection velocity, a quantity of first sequences comprised in the second sequence set, wherein

$$M_a = \left\lfloor \left\lfloor c/(4f_c * T_c * V_{max}) \right\rfloor / \left\lceil R_{max}/R_d \right\rceil \right\rfloor$$ , wherein

$M_a$ is the quantity of first sequences comprised in the second sequence set, $c$ is a propagation speed of an electromagnetic wave, $f_c$ is a carrier frequency, $T_c$ is a code length, $V_{max}$ is the maximum detection velocity, $R_{max}$ is the maximum detection range, $R_d$ is a range resolution, ⌊ ⌋ means rounding down, and ⌈ ⌉ means rounding up.

7. The signal processing method according to any one of claims 1 to 6, wherein a sequence set obtained through fast-time dimension coding comprises $M_1$ first orthogonal sequences, the $M_1$ first orthogonal sequences are sequences whose period cross-correlation value is zero in a valid delay, and the valid delay is less than or equal to a delay corresponding to a sequence length of the $M_1$ first orthogonal sequences; and
a sequence set obtained through slow-time dimension coding comprises $M_2$ second orthogonal sequences, and the $M_2$ second orthogonal sequences are Hadamard sequences or multi-carrier orthogonal sequences whose period cross-correlation value is zero in a case of a zero delay.

8. A signal processing apparatus, comprising a processing module and a transceiver module, wherein

the processing module is configured to determine a first sequence set, wherein the first sequence set comprises at least one first sequence, and the at least one first sequence is an orthogonal sequence obtained after fast-time dimension coding and slow-time dimension coding; and
the transceiver module is configured to send the first sequence set.

9. The signal processing apparatus according to claim 8, further comprising:

the processing module is further configured to determine $M_1$ fast-time dimension sequences; and
the processing module is further configured to determine a second sequence set, wherein the second sequence set comprises $M_a$ first sequences, the $M_a$ first sequences are sequences obtained after slow-time dimension coding is performed on the $M_1$ fast-time dimension sequences by using $M_2$ slow-time dimension sequences, $M_a = M_1 \times M_2$, $M_a$ is greater than or equal to M, and M is a quantity of transmit antennas

10. The signal processing apparatus according to claim 9, wherein
the processing module is further configured to determine the first sequence set based on the $M_a$ first sequences, and the first sequence set comprises M first sequences.

11. The signal processing apparatus according to claim 9 or 10, wherein

the processing module is further configured to determine a quantity of fast-time dimension sequences based on the quantity of transmit antennas and a quantity of slow-time dimension sequences; and

$$M_1 = \left\lceil M/M_2 \right\rceil$$ , and ⌈ ⌉ means rounding up.

12. The signal processing apparatus according to any one of claims 9 to 11, wherein if a coding scheme of the $M_1$ fast-time dimension sequences is the same as a coding scheme of the $M_2$ slow-time dimension sequences, the $M_a$ first sequences are a Kronecker product of the $M_1$ fast-time dimension sequences and the $M_2$ slow-time dimension sequences.

13. The signal processing apparatus according to any one of claims 9 to 12, wherein

the processing module is further configured to determine, based on a maximum detection range and a maximum detection velocity, a quantity of first sequences comprised in the second sequence set; and

$$M_a = \left\lfloor \left\lfloor c/(4f_c * T_c * V_{max}) \right\rfloor / \left\lceil R_{max}/R_d \right\rceil \right\rfloor$$ , wherein

$M_a$ is the quantity of first sequences comprised in the second sequence set, $c$ is a propagation speed of an electromagnetic wave, $f_c$ is a carrier frequency, $T_c$ is a code length, $V_{max}$ is the maximum detection velocity, $R_{max}$ is the maximum detection range, $R_d$ is a range resolution, ⌊ ⌋ means rounding down, and ⌈ ⌉ means rounding up.

**14.** The signal processing apparatus according to any one of claims 8 to 13, wherein a sequence set obtained through fast-time dimension coding comprises $M_1$ first orthogonal sequences, the $M_1$ first orthogonal sequences are sequences whose period cross-correlation value is zero in a valid delay, and the valid delay is less than or equal to a delay corresponding to a sequence length of the $M_1$ first orthogonal sequences; and

a sequence set obtained through slow-time dimension coding comprises $M_2$ second orthogonal sequences, and the $M_2$ second orthogonal sequences are Hadamard sequences or multi-carrier orthogonal sequences whose period cross-correlation value is zero in a case of a zero delay.

**15.** A signal processing apparatus, wherein the signal processing apparatus comprises a processor, and the processor is coupled to a memory;

the memory is configured to store a computer program; and
the processor is configured to execute the computer program stored in the memory, to enable the signal processing apparatus to perform the signal processing method according to any one of claims 1 to 7.

**16.** A chip system, wherein the chip system comprises a processor and an input/output port, the processor is configured to implement a processing function according to any one of claims 1 to 7, and the input/output port is configured to implement a transceiver function according to any one of claims 1 to 7.

**17.** A computer-readable storage medium, wherein the computer-readable storage medium comprises a program or instructions, and when the program or the instructions are run on a computer, the computer is enabled to perform the signal processing method according to any one of claims 1 to 7.

**18.** A computer program product, wherein the computer program product comprises computer program code, and when the computer program code is run on a computer, the computer is enabled to perform the signal processing method according to any one of claims 1 to 7.

Vehicle-mounted
radar

Send a signal

Receive a signal

Detection apparatus

Detection target

FIG. 1

Signal processing apparatus 200

201

Processor

CPU 0

CPU 1

204

Processor

CPU 0

CPU 1

202

Memory

203

Transceiver

FIG. 2

S301: Determine a first sequence set

S302: Send the first sequence set

FIG. 3

EP 4 105 685 A1

| Fast-time dimension sequence 1 | → | | Matching filter 1 | → | Decode by using the $M_2$ slow-time dimension sequences | → | Detection result 1 of the fast-time dimension sequence 1 |

Code by using $M_2$ slow-time dimension sequences

$M_1$ transmit antennas

N receive antennas

Fast-time dimension sequence 2

Fast-time dimension sequence $M_1$

Matching filter 2

Matching filter $M_1$

Detection result 2 of the fast-time dimension sequence 1

Detection result $M_2$ of the fast-time dimension sequence 1

FIG. 4

FIG. 5

FIG. 6

Signal processing apparatus 700

Processing module

701

Transceiver module

702

FIG. 7

## INTERNATIONAL SEARCH REPORT

| International application No. |
| --- |
| **PCT/CN2021/078323** |

**A. CLASSIFICATION OF SUBJECT MATTER**

G01S 7/484(2006.01)i

According to International Patent Classification (IPC) or to both national classification and IPC

**B. FIELDS SEARCHED**

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

CNABS, CNTXT, VEN, CNKI: 雷达, 发射, 发送, 快时间, 慢时间, 距离向, 方位向, 编码, 正交, 码分多路复用, 码分复用, 多维, fast?time, slow?time, CDM, transmit+, cod+

**C. DOCUMENTS CONSIDERED TO BE RELEVANT**

| Category* | Citation of document, with indication, where appropriate, of the relevant passages | Relevant to claim No. |
| --- | --- | --- |
| X | CN 109856603 A (SENSI TAIKE HEBEI TECHNOLOGY CO., LTD.) 07 June 2019 (2019-06-07) description, paragraphs [0006]-[0008], [0020], [0021], [0032]-[0054] | 1-18 |
| A | CN 108919267 A (INSTITUTE OF ELECTRONICS, CHINESE ACADEMY OF SCIENCES) 30 November 2018 (2018-11-30) entire document | 1-18 |
| A | CN 105717508 A (XIDIAN UNIVERSITY) 29 June 2016 (2016-06-29) entire document | 1-18 |
| A | CN 108828535 A (NATIONAL UNIVERSITY OF DEFENSE TECHNOLOGY OF PLA.) 16 November 2018 (2018-11-16) entire document | 1-18 |
| A | CN 110333507 A (INSTITUTE OF ELECTRONICS, CHINESE ACADEMY OF SCIENCES) 15 October 2019 (2019-10-15) entire document | 1-18 |
| A | WO 2020023248 A1 (QUALCOMM INCORPORATED) 30 January 2020 (2020-01-30) entire document | 1-18 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 May 2021** | **02 June 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

INTERNATIONAL SEARCH REPORT

Information on patent family members

International application No.

**PCT/CN2021/078323**

| Patent document cited in search report | | | Publication date (day/month/year) | Patent family member(s) | | | Publication date (day/month/year) |
|---|---|---|---|---|---|---|---|
| CN | 109856603 | A | 07 June 2019 | None | | | |
| CN | 108919267 | A | 30 November 2018 | None | | | |
| CN | 105717508 | A | 29 June 2016 | CN | 105717508 | B | 19 February 2019 |
| CN | 108828535 | A | 16 November 2018 | CN | 108828535 | B | 19 January 2021 |
| CN | 110333507 | A | 15 October 2019 | None | | | |
| WO | 2020023248 | A1 | 30 January 2020 | CN | 112513668 | A | 16 March 2021 |
| | | | | US | 2020033442 | A1 | 30 January 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010134407